# EUROPEAN PATENT SPECIFICATION

(11) **EP 0 279 885 B1**
(45) Date of publication and mention of the grant of the patent: **07.12.1994**
(21) Application number: 87102792.6
(22) Date of filing: 27.02.1987
(51) Int. Cl.: G11B 27/28, G11B 27/34

(54) **Video signal reproducing apparatus**
Video-Signalwiedergabegerät
Appareil de reproduction de signaux vidéo

(43) Date of publication of application: 31.08.1988
(73) Proprietor: SONY CORPORATION, Tokyo 141 (JP)
(72) Inventor: Ogawa, Tetsuo, Shinagawa-ku Tokyo (JP); Abe, Takao, Shinagawa-ku Tokyo (JP); Asai, Toshiya, Shinagawa-ku Tokyo (JP)
(74) Representative: Schmidt-Evers, Jürgen, Dipl.-Ing.

(56) References cited:
- EP-A- 0 100 167
- EP-A- 0 138 699
- PATENT ABSTRACTS OF JAPAN, vol. 2, no. 53, 17th April 1978, page 1163 E 78;& JP-A-53 17 307 (SONY K.K.) 17-02-1978
- TECHNISCHE MITTEILUNGEN DES RFZ, vol. 29, no. 1, March 1985, pages 21-24, East-Berlin, DDR; H.-J. LAMPE: "Zeitkodesignalgerät DF 7020"
- SMPTE JOURNAL, vol. 88, no. 10, October 1979, pages 712-715, Scarsdale, NewYork, US; G.W. BATES et al.: "Time code error correction utilizing amicroprocessor"
- PATENT ABSTRACTS OF JAPAN, vol. 8, no. 183 (P-296)[1620], 23rd August 1984;& JP-A-59 72 691 (MATSUSHITA DENKI SANGYO K.K.) 24-04-1984
- PATENT ABSTRACTS OF JAPAN, vol. 6, no. 133 (P-129)[1011], 20th July 1982;& JP-A-57 58 274 (HITACHI SEISAKUSHO K.K.) 07-04-1982
- PATENT ABSTRACTS OF JAPAN, vol. 9, no. 329 (P-416)[2052], 24th December 1985;& JP-A-60 154 369 (SONY K.K.) 14-08-1985

## Description

This invention relates to a video signal reproducing apparatus and, more particularly, to a video signal reproducing apparatus for use with a video tape having a longitudinal track having an address signal recorded thereon and successive slant tracks having a video signal recorded thereon and an information signal recorded theron at predetermined intervals.

In editing a video signal recorded on a video tape, it is important to achieve time related information specifying the distance of movement of the video tape. It is the conventional practice to provide such time related information by employing a time code signal recorded on a longitudinal time code track (LTC). Although this approach is satisfactory when video signal reproduction is performed in a normal mode, it fails to provide any reliable time code signal when the video signal reproduction is performed in a slow mode where the tape speed is too slow to reproduce a reliable time code signal. In fact, any reliable time code signal cannot be obtained when the tape speed is one-fifth or one-tenth of the normal speed at which the video tape moves in a recording mode.

In order to avoid the problem, one approach employs a control signal recorded on another longitudinal time control track (TRC) at predetermined intervals, for example, of one field to update the time related information specified by the last time code signal obtained when the time code signal is still reliable. With this approach, however, the control signal itself becomes too unriliable to update the time related information correctly according to the distance of movement of the video tape when video signal reproduction is performed in a slow mode.

From Patent Abstracts of Japan, vol. 2, no. 53, 17th April 1978, page 1163 E 78, and JP-A- 53 17 307 an apparatus (which is considered to represent the closest prior art) is known that uses the SMPTE time code from the longitudinal track for determining the absolute number of the video tracks. During slow motion reproduction the absolute number of the tracks is determined by using a code signal that has been recorded on each video track.

H.J. Lampe: "Zeitkodesignalgerät DF 7020", Technische Mitteilungen des RFZ, vol. 29, no. 1, March 1985, pp. 21-24, East-Berlin, discloses the recording of CTL signals on a second longitudinal track besides the known LTC signals on a first longitudinal track.

G.W. Bates et al.: "Time code error correction utilizing a microprocessor" in SMPTE Journal, vol. 88, no. 10, October 1979, pp. 712-715, Scarsdale, New York,refer to an apparatus according to JP-A-53 17 307 and describe an additional time code information inserted on unused portions of the video signal at low tape speed in addition to the SMPTE time code signal.

EP-A-0 160 539 describes memory means in connection with the problem of trouble-free reproduction of the video signal in the slow mode, especially in case of a reversal of the tape drive direction.

Another approach employs a signal produced at predetermined intervals of the distance of movement of the video tape from a timer roller having a video tape wound therearound at an angle, for example, greater than 180°C. However, this approach creates other problems. First, it requires a space consuming timer roller, resulting in a large-sized apparatus. Second, the timer roller rotates in a frictional manner with respect to the video tape and damages the video tape. In addition, a slippage would occur between the timer roller and the video tape, resulting in an error between the number of rotation of the timer roller and the distance of movement of the video tape to cause inaccurate time related information.

It may also considered to employ a time code signal recorded on one of the user's bits of each slant video track (TRV). However, this approach reduces the number of the user's bits alloted to users.

Therefore, it is a main object of the invention to provide a video signal reproducing apparatus which can provide a reliable time code signal even during a slow reproduction mode without any additional mechanical part.

There is provided, in accordance with the invention, an apparatus according to claim 1.

The invention will be described in greater detail by reference to the following description taken in connection with the accompanying, drawings, in which:
Fig. 1 is a diagram showing a tape format of a video tape used in the inventive apparatus;
Fig. 2 is a diagram showing a detailed tape format of the video tape;
Fig. 3 is a block diagram showing an output stage embodying the invention; and
Fig. 4 is a block diagram showing a video signal reproducing stage associated with the output stage.

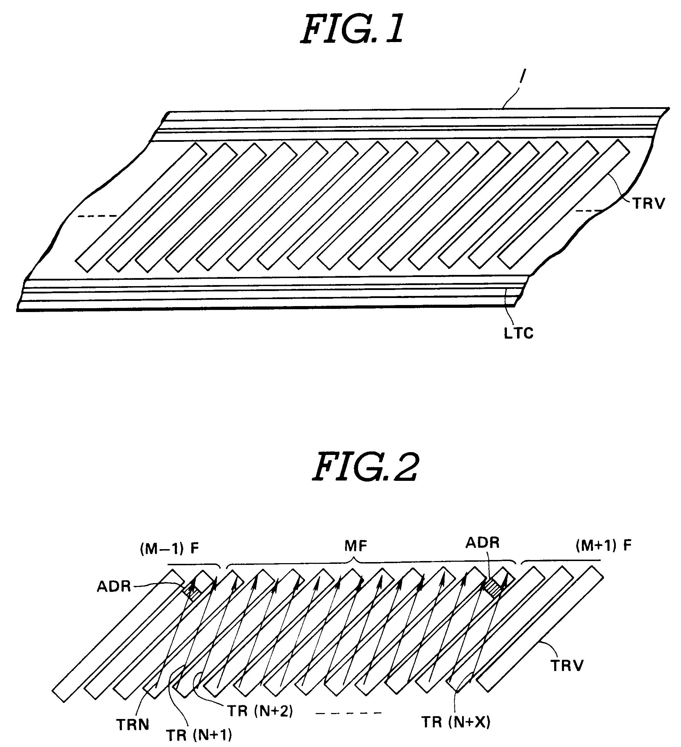

Referring to the drawings and more particularly to Fig. 1, there is illustrated a tape format of a digital video tape 1 used with the inventive apparatus. The video tape 1 is shown as having a longitudinal track LTC extending in the longitudinal direction of the video tape 1 and successive slant tracks TRV extending obliquely at the same angle with respect to the longitudinal direction of the video tape 1. The longitudinal track LTC has a time code signal that has been recorded thereon after bi-phase modulation. The slant tracks TRV have a video signal recorded thereon. One field video signals are recorded in sections on a plurality of slant tracks.

Referring to Fig. 2, which illustrates the tape pattern in greater detail, the character MF designates one field section including a plurality of (for example, 10 or 12) slant tracks TRN to TR(N+X) on which a magnetic head is scanning to reproduce the one field video signals. The arrows indicates traces of scanning of the magnetic head. Each of the slant tracks has a plurality of data blocks having various kinds of signals recorded thereon, the signals including a track code signal which indicates where the slant track is from the first in the field section, a block index signal which indicates where the data block is from the first in the track, and a field index signal which returns to its initial state each time four field sections are reproduced. The field index signal changes to 0, 1, 2, and 3 in this order each time reproduction advances from one field to another field. In addition, an address code area ADR is provided near the trailing edge of the last one of the slant tracks of each field section. In order to reproduce the data, which are recorded in sections in view of data drop-out considerations, in a predetermined order, an address code is provided for each data block.

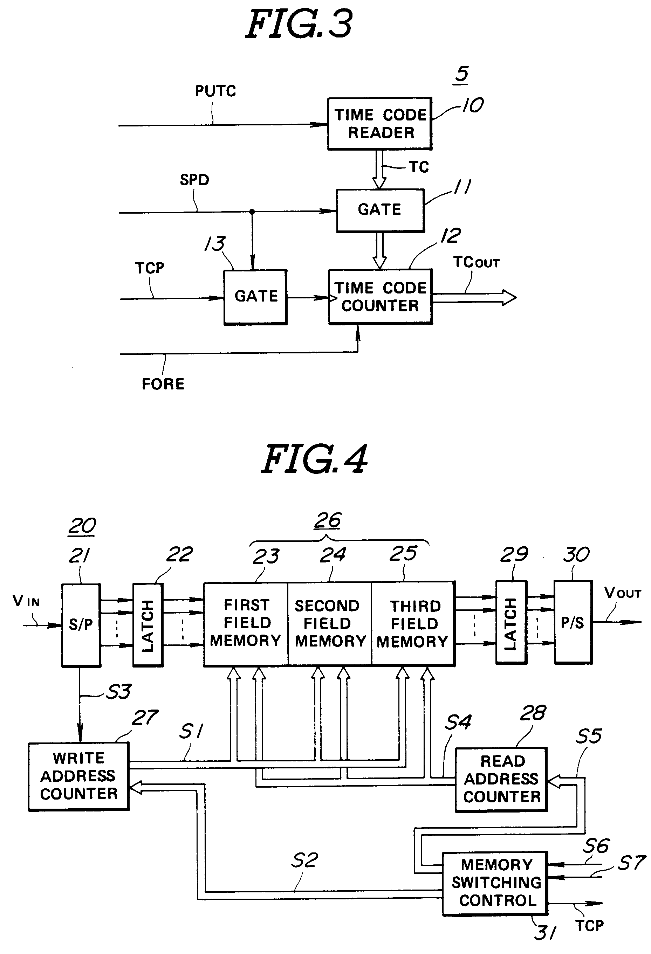

Referring to Fig. 3, there is illustrated a schematic block diagram of a time code signal output stage. The time code signal output stage, generally designated by the numeral 5, includes a time code reader 10. The time code reader 10 receives a pickup signal PUTC fed from a magnetic head and reproduces a time code signal TC which has been recorded on the longitudinal time code track LTC. This operation is performed in accordance with a clock signal extracted from the pickup signal PUTC. The time code signal TC is applied through a gate circuit 11 to the load terminal of a time code counter 12 which has a clock terminal coupled through a second gate circuit 13 to a time control pulse signal TCP fed from a memory switching control circuit 31 (Fig. 4) and an up-down terminal coupled to a forward/reverse signal FORE that represents the direction of running of the video tape 1.

A tape speed signal SPD is applied to the first gate circuit 11 and also to the second gate circuit 12. The tape speed signal SPD is a one-bit signal representative of the result of a determination as to whether or not the speed of movement of the video tape 1 is smaller than a predetermined value which may correspond to the minimum tape speed above which the time code signal TC can be read reliably. For example, the predetermined tape speed may be set at one-fourth of the normal tape speed used in a recording mode. The first gate circuit 11 opens to communicate the time code signal TC to the time code counter 12 only when the tape speed exceeds the predetermined value. The second gate circuit 13 opens to communicate the time control pulse signal TCP to the time code counter 12 only when the tape speed is smaller than the predetermined value.

Referring to Fig. 4, there is illustrated a video signal reproducing stage. The video signal reproducing stage, generally designated by the numeral 20, includes a series-parallel converter 21 which receives a reproduced video signal Vin and converts it into a corresponding parallel data signal. The output of the series-parallel converter 21 is coupled through a latch circuit 22 to a video signal memory 26 which is shown as comprising three field memories 23, 24 and 25. Two of the field memories 23, 24 and 25 are required to operate in a data writing mode where a reproduced video signal is written thereon since, in a slow reproduction mode, the magnetic head scanning traces, indicated by arrows TRN to TR(N+X) in Fig. 2, rise with respect to the video tracks TRV so that some magnetic head scanning traces extend over two field sections MF and (M+1)F. The other field memory is required to operate in a data reading mode where the written data are read therefrom during the data writting mode of the two field memories.

The first, second and third field memories 23, 24 and 25 operate under the control of a memory control unit including a write address counter 27, a read address counter 28, and a memory switching control circuit 31. The memory switching control circuit 31 receives a reproduction information signal S6 recorded on the video tape 1 and a reproduction mode selection information signal S7 provided through a control panel. For example, the reproduction information signal S6 may be an address code signal recorded on an address code area provided near the trailing edge of the last slant track of each field section. The memory switching control circuit 31 produces an address load signal S2 to the write address counter 27, an address load signal S5 to the read address counter 28, and a time code control pulse signal TPC to the gate circuit 13 (Fig. 3) each time it receives an address code signal; that is, when reproduction of one-field video signals is completed. The address load signal S2 has an address indication which specifies a memory area on which the video signal is to be written. The address load signal S5 has an address indication which specifies a memory area from which the written video signal is read.

The write address counter 27 receives the address load signal S2 fed from the memory switching control circuit 31 and starts counting reproduction clock pulses S3 from a count corresponding to the address loaded by the address load signal S2. The write address counter 27 produces a write address signal S1 to the video signal memory 26 so as to write video data on a memory area having an address specified by the write address signal S1.

The read address counter 28 receives the address load signal S5 fed from the memory switching control circuit 31 and starts counting reproduction clock pulses S3 from a count corresponding to the address loaded by the address load signal S5. The read address counter 28 produces a read address signal S4 to the video signal memory 26 so as to read video data out of a memory area having an address specified by the read address signal S4.

The video data read from the video signal memory 26 are fed through a latch circuit 29 to a parallel-series converter 30 which converts it into a corresponding series signal Vout.

The operation is as follows. Assuming first that the video signal is reproduced in a normal reproduction mode where the video tape 1 moves at such a normal speed as to permit reliable reading of the time code signal TC recorded on the time code track LTC, the tape speed signal SPC has a value representing the tape speed exceeding a predetermined value. As a result, the gate circuit 11 opens to communicate the time code signal TC to the load terminal of the time code counter 12, whereas the gate circuit 13 closes to interrupt the time control pulse signal TCP to the time code counter 12. Consequently, the time code counter 12 updates its count to a value corresponding to the address loaded by the time code signal TC each time a time code signal is applied thereto. Therefore, the time code counter 12 produces an output signal TCout which is substantially the same as the inputted time code signal TC.

When the video signal reproducing operation is changed from the normal mode into a slow mode where the video tape 1 travels at such a low speed as to render reliable reading of the time code signal TC difficult, the tape speed signal SPD changes to a value representing the tape speed being less than the predetermined value. As a result, the gate circuit 11 closes to interrupt the time code signal TC to the time code counter 12, whereas the gate circuit 13 opens to communicate the time control pulse signal TCP to the clock terminal of the time code counter 12. At this time, the time code counter 12 has a count corresponding to the address loaded by the last time code signal fed from the time code reader 10. Consequently, the time code counter 12 starts counting the time control pulses TCP from a count corresponding to the address loaded by the last time code signal. The time code counter 12 responds to the forward/reverse signal FORE and counts the time control pulses upward when the video tape 1 travels in the forward direction and downward when the video tape 1 travels in the reverse direction. The time code counter 12 produces an output signal TCout corresponding to the count of the time code counter 12.

It is, therefore, apparent that there has been provided, in accordance with this invention, a video signal reproducing apparatus for providing a reliable time related information even during a slow reproduction mode that fully satisfies the objects, aims and advantages set forth above. While this invention has been described in conjunction with a specific embodiment thereof, it is evident that many alternatives, modificastions and variations will be apparent to those skilled in the art. Accordingly, it is intended to embrace all alternatives, modifications and variations that fall within the scope of the appended claims.

## Claims

1. An apparatus for use with a video tape (1) having a longitudinal track (LTC) having an address signal (TC) recorded thereon and successive slant tracks (TRV) having a video signal and an information signal (S6) recorded thereon at predetermined intervalls, comprising:
- reproducing means for reproducing said video signal, said information signal and said address signal,
- control means (27, 28, 31) responsive to said information signal (S6) for generating a control pulse signal (TCP),
- address indication means (12) for providing an address indication signal and
- switching means (11, 13) for selectively supplying said address signal (TC) and said control pulse signal (TCP) to said address indication means (12) according to the speed of movement of said video tape (1), whereby said switching means (11, 13) supplies said address signal (TC) to said address indication means (12) when said speed of movement of said video tape (1) exceeds a predetermined value and said switching means (11, 13) supplies said control pulse signal (TCP) to said address indication means (12) when said speed of movement of said video tape (1) is less than that predetermined value,
characterized in that
a) said information signal (S6) is the field index signal recorded on one of a predetermined plurality of slant tracks (TRN....TR(N+X)) having one field of video signal recorded thereon,
b) memory means (26) for memorizing said video signal reproduced by said reproducing means is provided
c) said control means (27, 28, 31) responsive to said information signal (S6) and for generating said control pulse signal (TCP) is responsive to said information signal (S6) for controlling said memory means (26) in order that each field of video signal reproduced by said reproducing means is memorized in said memory means (26) separately, and
d) said address indication means comprise counter means (12) for outputting said address indication signal, said counter means (12) updates a count thereof according to the address signal (TC) or the control pulse signal (TCP).

2. The apparatus as claimed in claim 1, characterized in that said information signal is the address code signal recorded on the last of a predetermined plurality of slant tracks (TRN...TR(N+X)) having one field of video signal recorded thereon.

3. The apparatus as claimed in claim 1 or 2, characterized in that said predetermined value is one-fourth of a normal speed.

4. The apparatus as claimed in any one of claims 1 to 3, characterized in that said address indication means (12) provides a continuous address indication.

5. The apparatus as claimed in any one of claims 1 to 4, characterized in that said counter means (12) is responsive to said address signal (TC) for accumulating a count corresponding to a value loaded by said address signal (TC) and responsive to said control pulse signal (TCP) for updating said count, thereby accumulating a count corresponding to said address indication signal.

6. The apparatus as claimed in any one of claims 1 to 5, characterized in that said counter means (12) includes means responsive to the direction of movement of said tape (1) for counting said control pulse signal (TCP) upward when the tape (1) travels in a forward direction and downward when the tape travels in a reverse direction.

## Patentansprüche

1. Vorrichtung zur Verwendung mit einem Videoband (1), welches eine Längsspur (LTC) mit einem darauf aufgezeichneten Adreßsignal (TC) und aufeinanderfolgende Schrägspuren (TRV), auf denen ein Videosignal und in vorgegebenen Abständen ein Informationssignal (S6) aufgezeichnet ist, besitzt, umfassend:
- Wiedergabemittel zur Wiedergabe des Videosignals, des Informationssignals und des Adreßsignals;
- Steuermittel (27, 28 31), welche auf das Informationssignal (S6) zur Erzeugung eines Steuerimpulssignals (TCP) reagieren,
- Adreßanzeigemittel (12) zur Bereitstellung eines Adreßanzeigesignals und
- Schaltmittel (11, 13) zum selektiven Anlegen des Adreßsignals (TC) und des Steuerimpulssignals (TCP) an die Adreßanzeigemittel (12) entsprechend der Bewegungsgeschwindigkeit des Videobands (1), wodurch die Schaltmittel (11, 13) das Adreßsignal (TC) den Adreßanzeigemittel (12) zuführen, wenn die Bewegungsgeschwindigkeit des Videobands (1) einen vorgegebenen Wert überschreitet und die Schaltmittel (11, 13) das Steuerimpulssignal (TPC) den Adreßanzeigemitteln (12) zuführen, wenn die Bewegungsgeschwindigkeit des Videobands (1) kleiner als jener vorgegebene Wert ist,
dadurch gekennzeichnet,
a) daß das Informationssignal (S6) das Halbbildindexsignal ist, welches auf einer einzigen einer vorgegebenen Vielzahl von Schrägspuren (TRN....TR(N+X)) aufgezeichnet ist, auf denen ein einziges Halbbild von Videosignalen aufgezeichnet ist,
b) daß Speichermittel (26) zum Speichern des durch die Wiedergabemittel wiedergegebenen Videosignals vorgesehen sind,
c) daß die auf das Informationssignal (S6) reagierenden und das Steuerimpulssignal (TCP) erzeugenden Steuermittel (27, 28, 31) auf das Informationssignal (S6) zur Steuerung der Speichermittel (26) reagieren, damit jedes durch die Wiedergabemittel wiedergegebene Videosignalhalbbild in den Speichermitteln (26) getrennt gespeichert wird, und
d) daß die Adreßanzeigemittel zur Ausgabe des Adreßanzeigesignals Zählmittel (12) enthalten, wobei die Zählmittel (12) ihre Gesamtzahl gemäß dem Adreßsignal (TC) oder dem Steuerimpulssignal (TCP) auf den neuesten Stand bringen.

2. Vorrichtung nach Anspruch 1, dadurch gekennzeichnet, daß das Informationssignal das Adreßcodesignal ist, welches auf der letzten einer vorgegebenen Vielzahl von Schrägspuren (TRN....TR(N+X)) mit einem darauf aufgezeichneten Videosignalhalbbild aufgezeichnet ist.

3. Vorrichtung nach Anspruch 1 oder 2, dadurch gekennzeichnet, daß der vorgegebene Wert ein Viertel einer normalen Geschwindigkeit sit.

4. Vorrichtung nach einem der Ansprüche 1 bis 3, dadurch gekennzeichnet, daß die Adreßanzeigemittel (12) eine kontinuierliche Adreßanzeige bereitstellen.

5. Vorrichtung nach einem der Ansprüche 1 bis 4, dadurch gekennzeichnet, daß die Zählmittel (12) auf das Adreßsignal (TC) zum Aufsummieren einer einem durch das Adreßsignal (TC) geladenen Wert entsprechenden Gesamtzahl reagieren und auf das Steuerimpulssignal (TCP) reagieren, um die Gesamtzahl auf den neuesten Stand zu bringen, um dadurch eine dem Adreßanzeigesignal entsprechende Gesamtzahl aufzusummieren.

6. Vorrichtung nach einem der Ansprüche 1 bis 5, dadurch gekennzeichnet, daß die Zählmittel (12) Mittel enthalten, welche auf die Bewegungsrichtung des Bands (1) reagieren, um das Steuerimpulssignal (TCP) aufwärts zu zählen, wenn sich das Band (1) in Vorwärtsrichtung bewegt und abwärts, wenn sich das Band in eine Rückwärtsrichtung bewegt.

## Revendications

1. Dispositif pour l'utilisation avec une bande vidéo (1) possédant une piste longitudinale (LTC) possédant un signal d'adressage (TC) enregistré dessus et des pistes inclinées successives (TRV) présentant un signal vidéo et un signal d'information (S6) enregistrés dessus sur des intervalles prédéterminés, dispositif comprenant :
- un moyen de lecture pour la lecture dudit signal vidéo, dudit signal d'information et dudit signal d'adressage;
- des moyens de commande (27, 28, 31) sensibles audit signal d'information (S6) pour générer un signal d'impulsion de commande (TCP);
- un moyen d'indication d'adresse (12) pour fournir un signal d'indication d'adresse; et
- un moyen de commutation (11, 13) pour fournir, de façon sélective, ledit signal d'adressage (TC) et ledit signal d'impulsion de commande (TCP) audit moyen d'indication d'adresse (12) selon la vitesse de déplacement de ladite bande vidéo (1), ledit moyen de commutation (11, 13) fournissant ainsi ledit signal d'adressage (TC) audit moyen d'indication d'adresse (12) lorsque ladite vitesse de déplacement de ladite bande vidéo (1) dépasse une valeur prédéterminée et ledit moyen de commutation (11, 13) fournissant ainsi ledit signal d'impulsion de commande (TCP) audit moyen d'indication d'adresse (12) lorsque ladite vitesse de déplacement de ladite bande vidéo (1) est inférieure à cette valeur prédéterminée;
dispositif caractérisé en ce que :
a) ledit signal d'information (86) est le signal d'index de champ enregistré sur une piste parmi une pluralité prédéterminée de pistes inclinées (TRN, ..., TR(N+X)) présentant un champ enregistré du signal vidéo;
b) on prévoit une mémoire (26) pour mémoriser ledit signal vidéo lu par ledit moyen de lecture;
c) lesdits moyens de commande (27, 28, 31) sensibles audit signal d'information (S6) et pour générer ledit signal d'impulsion de commande (TCP) sont sensibles audit signal d'information (S6) pour commander ledit moyen de mémoire (26) de telle façon que chaque champ du signal vidéo lu par ledit moyen de lecture soit mémorisé dans ledit moyen de mémoire (26) de façon séparée; et
d) ledit moyen d'indication d'adresse comprend un moyen de compteur (12) pour générer ledit signal d'indication d'adresse, ledit moyen de compteur (12) mettant à jour un décompte selon le signal d'adressage (TC) ou selon le signal d'impulsion de commande (TCP).

2. Dispositif selon la revendication 1, caractérisé en ce que ledit signal d'information est le signal de code d'adressage enregistré sur la dernière piste parmi une pluralité prédéterminée de pistes inclinées (TRN, ..., TR(N+X)) possédant un champ du signal vidéo enregistré.

3. Dispositif selon la revendication 1 ou 2, caractérisé en ce que ladite valeur prédéterminée est égale au quart d'une vitesse normale.

4. Dispositif selon l'une quelconque des revendications 1 à 3, caractérisé en ce que ledit moyen d'indication d'adresse (12) fournit une indication d'adresse en continu.

5. Dispositif selon l'une quelconque des revendications 1 à 4, caractérisé en ce que ledit moyen de compteur (12) est sensible audit signal d'adressage (TC) pour accumuler un décompte correspondant à une valeur chargée par ledit signal d'adressage (TC) et est sensible audit signal d'impulsion de commande (TCP) pour mettre à jour ledit décompte, accumulant ainsi un décompte correspondant audit signal d'indication d'adresse.

6. Dispositif selon l'une quelconque des revendications 1 à 5, caractérisé en ce que ledit moyen de compteur (12) comprend un moyen sensible au sens de déplacement de ladite bande (1) pour compter ledit signal d'impulsion de commande (TCP) vers le haut lorsque la bande (1) se déplace dans une direction avant et vers le bas lorsque la bande (1) se déplace dans une direction inverse.
